# EUROPÄISCHE PATENTSCHRIFT

(11) **EP 1 426 272 B1**
(45) Veröffentlichungstag und Bekanntmachung des Hinweises auf die Patenterteilung: **09.08.2006**
(21) Anmeldenummer: 03026006.1
(22) Anmeldetag: 11.11.2003
(51) Int. Cl.: B62D 25/24

(54) **Einstückiger Verschlussdeckel**
One-piece closure cap
Couvercle de fermeture monobloc

(30) Priorität: 02.12.2002 DE 20218716 U
(43) Veröffentlichungstag der Anmeldung: 09.06.2004
(73) Patentinhaber: TRW Automotive Electronics & Components GmbH & Co. KG, 78315 Radolfzell (DE)
(72) Erfinder: Kraus, Willibald, 67269 Gründstadt (DE)
(74) Vertreter: Schieschke, Klaus

(56) Entgegenhaltungen:
- EP-A- 0 970 878
- DE-A- 3 902 500
- US-A1- 2001 049 858

## Beschreibung

Die Erfindung bezieht sich auf einen einstückigen Verschlussdeckel aus Kunststoff, insbesondere zum Verschließen einer Öffnung in einem Träger, nach dem Oberbegriff des Anspruchs 1.

Als Stand der Technik sind bereits derartige Verschlussdeckel bekannt (DE 35 12 582 C3, DE 37 13 503 C1). Diese Verschlussdeckel weisen jeweils eine elastische Dichtlippe und dieser gegenüberliegend einen oder mehrere Rastringe auf. Hierdurch soll im montierten Zustand nach der Endmontage neben einer guten Halterung in einem Träger eine gute Abdichtung gewährleistet werden.

Eine weitere Konstruktion von der die vorliegende Erfindung ausgeht, ist so beschaffen, dass der Grundkörper als trichterförmiger, umlaufender Bund ausgebildet ist, wobei der Boden parallel zur Trägeröffnung bewegt werden kann und der Boden und ein Wandteil miteinander zusammen wirkende Verriegelungselemente aufweisen (DE 39 02 500 C2).

Nächstkommender Stand der Technik ist ein einstückiger Verschlussdeckel, bei welchem der Außenschenkel und der Grundkörper über die Rastverbindung nach der Vormontage mit dem Einsetzen in die Öffnung und nach der Endmontage miteinander verriegelbar sind, wobei an die umlaufende Kante des Außenschenkels ein den Träger im Bereich der Öffnung beaufschlagender Außenbund anschließt (US 2001/049858 A1).

Bei dieser bekannten Konstruktion geht der Innenschenkel des Verschlussdeckels in mehrere, über den Umfang verteilte Zähne über, welche jeweils mit einer schrägen Wandung versehen sind. Nach Durchführung der Endmontage legen sich diese Zähne mit ihren entsprechenden schrägen Wandungen an der Rückseite der Öffnung eines Trägers an und verriegeln damit den einstückigen Verschlussdeckel. Infolge der zahnartigen Konstruktion dieses Abschlussbereichs ist über einen längeren Zeitabschnitt keine einwandfreie Abdichtung durch den Verschlussdeckel gewährleistet, wobei zum anderen diese bekannte Konstruktion nur für Träger mit parallel laufenden Flächen geeignet ist.

Aufgabe der vorliegenden Erfindung ist es, derartige Verschlussdeckel dahingehend zu verbessern, dass sie eine Öffnung eines Trägers einwandfrei abdichten, wenn dieser im Bereich der Trägeröffnung einen umlaufenden Flansch aufweist.

Diese Aufgabe wird erfindungsgemäß mit den Merkmalen im kennzeichnenden Teil des Ansprüchs 1 gelöst

Hierdurch ergibt sich der Vorteil, dass der einstückige Verschlussdeckel einfach in eine Öffnung eingesetzt wird, wobei nach dieser Vormontage durch Druck auf den platten-förmigen Grundkörper die Rastverbindung zwischen dem Außenschenkel und dem Grundkörper hergestellt wird und damit ein Teil des Außenschenkels und der Zwischenbereich einen umlaufenden Flansch des Trägers wulstartig hintergreift und hierdurch eine Abdichtung gewährleistet.

Vorteilhafte Weiterbildungen ergeben sich aus den Unteransprüchen.

Die Erfindung wird nachfolgend anhand eines in der Zeichnung dargestellten Ausführungsbeispieles näher beschrieben. In der Zeichnung zeigen:
- Fig. 1: eine Draufsicht auf den erfindungsgemäßen Verschlussdeckel,
- Fig. 2: einen Schnitt nach der Linie II-II in Fig. 1, wobei die obere Darstellung die Vormontage und die untere Darstellung die Endmontage zeigt.

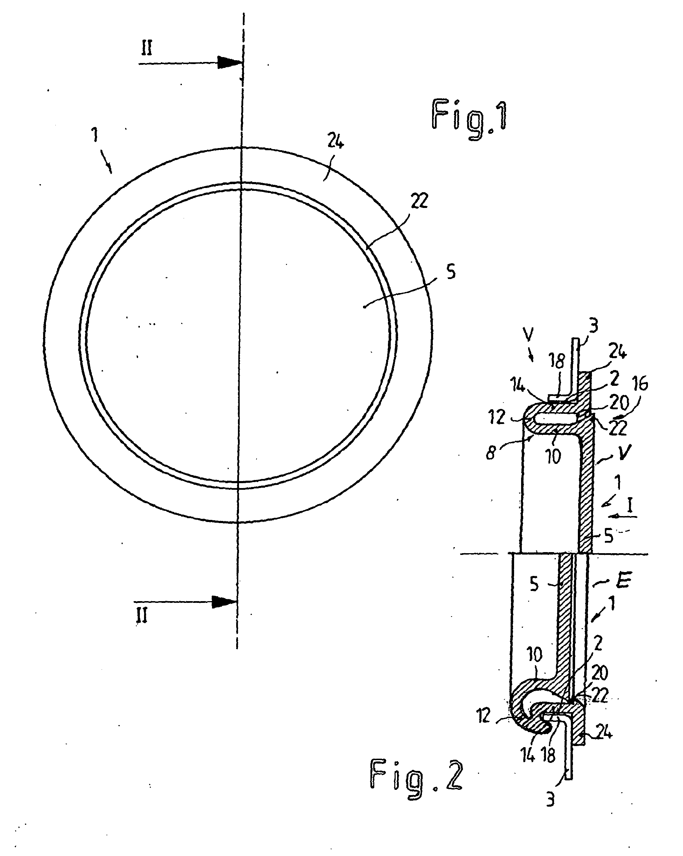

Der einstückige erfindungsgemäße Verschlussdeckel 1, welcher aus Kunststoff besteht, dient zum Verschließen einer Öffnung 2 in einem Träger 3 nach Fig. 2. Dieser Verschlussdeckel weist einen plattenförmigen Grundkörper 5 auf, an welchen sich ein umlaufender Bund 8 anschließt. Der Bund 8 ist U-förmig ausgebildet mit einem Innenschenkel 10, einem Zwischenbereich 12 und einem Außenschenkel 14. Hierbei verbindet der Zwischenbereich 12 den Innenschenkel 10 mit dem Außenschenkel 14.

Im Eingangsbereich weist der Außenschenkel 14 eine umlaufende Kante 20 auf, welche mit einer Gegenkante 22 des Grundkörpers 5 zusammenwirken kann und damit eine Rastverbindung 16 bildet.

An die umlaufende Kante 20 des Außenschenkels 14 schließt ein den Träger 3 im Bereich der Öffnung 2 beaufschlagender Außenbund 24 auf. Der Träger 3 weist vorzugsweise einen umlaufenden Flansch 18 auf, welcher parallel zum Innenschenkel 10 bzw. zum Außenschenkel 14 verläuft. Der Außenbund 24 und der plattenförmige Grundkörper 5 verlaufen ebenfalls vorzugsweise parallel.

Aus Fig. 2 ist darüber hinaus erkennbar, dass in der Vormontage V der Grundkörper 5 höher und in der Endmontage E niedriger als der Außenbund 24 liegt.

Weiterhin ist aus Fig. 2 erkennbar, dass der Innenschenkel 10 und der Außenschenkel 14 parallel zueinander verlaufen und dass an den Innenschenkel 10 rechtwinklig der plattenförmige Grundkörper 5 und an den Außenschenkel 14 rechtwinklig der Außenbund 24 anschließen.

Fig. 2 stellt im oberen Bereich die Vormontage V dar. Hier wird der erfindungsgemäße Verschlussdeckel 1 in die Öffnung 2 eines Trägers 3 eingesetzt, wobei der Außenbund 24 die Oberseite des Trägers 3 beaufschlagt und der Außenschenkel 14 parallel zum umlaufenden Flansch 18 der Öffnung 2 des Trägers 3 liegt.

Nach dieser Endmontage wird in Pfeilrichtung I auf dem plattenförmigen Grundkörper 5 Druck ausgeübt, wodurch eine Gegenkante 22 des Grundkörpers 5 eine Kante 20 im Eingangsbereich des Außenschenkels 14 hintergreift und die Position in der unteren Darstellung nach Fig. 2 eingenommen wird. Hierdurch ist die Rastverbindung 16 zwischen dem Außenschenkel 14 und dem Grundkörper 5 hergestellt, wobei in dieser Lage ein Teil des Zwischenbereichs 12 und ein Teil des Außenschenkels 14 den umlaufenden Flansch 18 wulstartig teilweise hintergreifen und damit neben einer guten Halterung eine Abdichtung gewährleisten. Der umlaufende Bund 18 und ein Bereich der Öffnung 2 des Trägers 3 werden damit von dem Außenschenkel 24 und dem wulstartigen Übergriff des Zwischenbereichs 12 und des Außenschenkels 14 funktionssicher beaufschlagt. Nach der Endmontage E ist damit ein einwandfreier Sitz des Verschlussdeckels in der Öffnung 2 des Trägers 3 gewährleistet.

Die Endmontage E kann dadurch aufgehoben werden, das entgegen der Pfeilrichtung I auf den Grundkörper 5 ein Druck ausgeübt wird, wodurch die Kante 20 nicht mehr die Gegenkante 22 hintergreift und wieder die Position nach der Lage V eingenommen wird.

Die gesamte Konstruktion ist einfach aufgebaut, schnell zu montieren und weist eine hohe Effektivität auf.

## Patentansprüche

1. Einstückiger Verschlussdeckel (1) aus Kunststoff, insbesondere zum Verschließen einer Öffnung (2) in einem Träger (3), mit einem Grundkörper (5), an welchen sich ein umlaufender Bund (8) anschließt, welcher U-förmig ausgebildet ist mit einem Innenschenkel (10), einem Zwischenbereich (12) und einem Außenschenkel (14) und mit mindestens einer Rastverbindung (16) am Außenschenkel (14),
wobei der Außenschenkel (14) und der Grundkörper (8) über die Rastverbindung (16) nach der Vormontage (V) mit dem Einsetzen in die Öffnung (2) und nach der Endmontage (E) miteinander verriegelbar sind und
wobei an die umlaufende Kante (20) des Außenschenkels (14) an den Träger (3) im Bereich der Öffnung (2) der beaufschlagende Außenbund (24) anschließt,
**dadurch gekennzeichnet,**
**dass** der Außenbund (24) und der plattenförmig ausgebildete Grundkörper (5) nach der Endmontage (E) parallel verlaufen und
**dass** nach der Verriegelung des Außenschenkels (14) mit dem Grundkörper (5) nach der Endmontage (E) der Zwischenbereich (12) und der Außenschenkel (14) einen umlaufenden Flansch (18) im Bereich der Öffnung (2) des Trägers (3) so verformt wind, daß sie wulstartig abdichtend teilweise hintergreifen.

2. Verschlussdeckel nach Anspruch 1, **dadurch gekennzeichnet, dass** an den Außenschenkeln (14) rechtwinklig der Außenbund (24) anschließt.

## Claims

1. One-piece closure cap (1) made of plastic, in particular for closing an opening (2) in a support (3), with a basic body (5) adjoined by an encircling collar (8) which is of U-shaped design and has an inner limb (10), an intermediate region (12) and an outer limb (14), and with at least one latching connection (16) on the outer limb (14),
the outer limb (14) and the basic body (5) being able to be locked to each other via the latching connection (16) after the preassembly stage (V) with insertion into the opening (2) and after the final assembly stage (E), and
the outer collar (24), which acts upon the support (3), adjoining the encircling edge (20) of the outer limb (14) on the support (3) in the region of the opening (2),
**characterized in that** the outer collar (24) and the basic body (5), which is of plate-like design, run parallel after the final assembly stage (E), and
**in that**, after the locking of the outer limb (14) to the basic body (5) after the final assembly stage (E), the intermediate region (12) and the outer limb (14) are deformed by an encircling flange (18) in the region of the opening (2) of the support (3) in such a manner that they partially engage behind it in a bead-like and sealing manner.

2. Closure cap according to Claim 1, **characterized in that** the outer collar (24) adjoins the outer limbs (14) at right angles.

## Revendications

1. Couvercle monobloc de fermeture (1) en matière plastique, notamment pour obturer une ouverture (2) pratiquée dans un support (3), comportant un corps de base (5) auquel se rattache un collet périphérique (8) réalisé de configuration en U, avec une branche intérieure (10), une zone intermédiaire (12) et une branche extérieure (14), et présentant au moins une solidarisation encliquetable (16) sur la branche extérieure (14),
sachant que la branche extérieure (14) et le corps de base (8) peuvent être verrouillés l'un sur l'autre par l'intermédiaire de la solidarisation encliquetable (16) à l'issue du préassemblage (V), par insertion dans l'ouverture (2), et à l'issue de l'assemblage définitif (E), et
sachant que la collerette extérieure opérante (24) se rattache au bord périphérique (20) de la branche extérieure (14), sur le support (3), dans la région de l'ouverture (2),
**caractérisé**
**par le fait que** la collerette extérieure (24), et le corps de base (5) réalisé en forme de plaque, s'étendent parallèlement à l'issue de l'assemblage définitif (E); et
**par le fait que**, après le verrouillage de la branche extérieure (14) sur le corps de base (5), à l'issue de l'assemblage définitif (E), la zone intermédiaire (12) et la branche extérieure (14) sont déformées de façon telle qu'elles emprisonnent partiellement par-derrière à la manière d'un bourrelet, avec effet d'étanchement, une aile périphérique (18) dans la région de l'ouverture (2) du support (3).

2. Couvercle de fermeture selon la revendication 1, **caractérisé par le fait que** la collerette extérieure (24) se rattache à angle droit aux branches extérieures (14).
